Europäisches Patentamt

(19) **European Patent Office**

**Office européen des brevets**

(11) Numéro de publication: **0 143 044**
**B1**

(12) FASCICULE DE BREVET EUROPEEN

(45) Date de publication du fascicule du brevet:
**19.11.87**

(21) Numéro de dépôt: **84402280.6**

(22) Date de dépôt: **12.11.84**

(51) Int. Cl.⁴: **B 61 D 1/02,** B 61 D 1/08,
B 62 D 47/02, B 60 N 1/00,
B 61 D 31/00, B 63 B 29/10,
B 64 D 11/00

(54) **Equipement de véhicules de transport en commun et de lieux de transit et application particulière.**

(30) Priorité: **17.11.83 FR 8318271**

(43) Date de publication de la demande:
**29.05.85 Bulletin 85/22**

(45) Mention de la délivrance du brevet:
**19.11.87 Bulletin 87/47**

(84) Etats contractants désignés:
**BE DE FR GB IT NL SE**

(56) Documents cités:
**WO - A - 80/01156**
**BE - A - 562 934**
**FR - A - 548 425**
**FR - A - 2 146 570**
**US - A - 2 545 523**

*Le dossier contient des informations techniques présentées postérieurement au dépôt de la demande et ne figurant pas dans le présent fascicule.*

(73) Titulaire: **LEGRAND, Pierre, 98 rue de Rennes,**
**F-75006 Paris (FR)**

(72) Inventeur: **LEGRAND, Pierre, 98 rue de Rennes,**
**F-75006 Paris (FR)**

(74) Mandataire: **Mongrédien, André et al, c/o**
**BREVATOME 25, rue de Ponthieu, F-75008 Paris (FR)**

ACTORUM AG

## Description

La présente invention concerne un équipement de véhicules de transport en commun par air, eau, route, rail et de lieux de transit, du type comportant la présence simultanée de sièges «assis» et de sièges «relax». A ce sujet, le propre brevet français FR-A- 2 158 617 du demandeur mentionne bien la présence simultanée de sièges assis et de sièges relax. Il s'agit toutefois d'un cas manifestement différent du présent brevet. En effet, dans le brevet FR-A- 2 158 617, les sièges relax sont imbriqués et superposés dans les blocs bordés de deux couloirs, et les sièges assis ne sont placés qu'en complément et de l'autre côté desdits couloirs, en simple juxtaposition. Donc, sans aucune combinaison, simplement pour valoriser un espace vide autrement perdu, et qu'on aurait d'ailleurs pu, tout aussi bien combler par d'autres accessoires, tels que distributeur de boissons, sans rapport fonctionnel avec le logement des passagers. Un autre document, le brevet belge n° 562 934, délivré le 31 décembre 1957, décrit une voiture de chemins de fer dont les compartiments ont deux étages de sièges, à savoir des sièges «longitudinaux» (par rapport à la marche du train) au niveau inférieur, complétés par des couchettes à l'étage supérieur. Ces couchettes, toutefois, sont planes et «transversales», et leur implantation, totalement indépendante des sièges inférieures, ne relève que d'une simple juxtaposition, pour occuper un espace qui autrement serait vide. Au contraire, le présent brevet comporte une combinaison verticale précise et multiple entre des sièges assis et des sièges relax situés au-dessus des sièges assis, comme on va le voir dans ce qui suit.

En effet, la présente invention a pour objet un équipement de véhicules de transport en commun par air, eau, route, rail et de lieux de transit, du type comportant la présence simultanée de sièges «assis» et de sièges «relax», comprenant un couloir principal longitudinal, au bord duquel sont disposés au sol symétriquement des rangées transversales sucessives de sièges identiques dits «assis», lesdites rangées étant d'orientation alternée et de double pas selon un quadrillage comprenant des suites longitudinales le long desquelles ces sièges assis successifs sont, soit dos à dos avec dossiers accolés , soit en vis-à-vis encadrant des couloirs secondaires transversaux et comprenant, au-dessus de deux suites longitudinales des sièges «assis», des couchettes, caractérisé en ce que ces couchettes sont des sièges «relax» aux extrémités relevées, successifs, identiques, longitudinaux, d'orientation alternée, à raison d'un relax pour deux sièges assis, et dont les profils minces sont ondulés en longueur et positionnés en hauteur et longueur, de façon que leurs points bas milieu prennent appui par des supports sur lesdits dossiers accolés dos à dos et que leurs extrémités voisines relevées soient suspendues à la voûte intérieure au moyen de tirants, et constituent les hauts des couloirs secondaires successifs, des marches placées de chaque bord du couloir sur les verticales médianes des flancs communs à chaque couple de sièges accolés dos à dos permettant à un passager de s'asseoir de dos sur le point bas milieu du relax d'un bord du couloir en s'élevant au moyen des marches du bord en face.

Tous les chiffres cités par la suite, relatifs ou absolus, sont approchés, pouvant varier selon l'abitacle et le standing. De plus, pour la clarté, les sièges assis qui vont être dessinés ont des faces planes. Le luxe d'un choix individuel entre position assise en convivialité et position allongée en isolement, ne fût jusqu'ici qu'un rêve non rentable. L'invention procure les moyens de cette nécessaire rentabilité, ledit choix s'opérant entre des sièges du genre classique dits «assis» au sol par compartiments de quatre optimum, et des sièges allongés ou chaiseslongues dits «relax» situés au-dessus desdits sièges «assis».

Cette rentabilité tient aux gains suivants: primo gain de +13% à +25%, voire plus, en nombre total de sièges «assis plus relax», comparé au remplissage classique au sol du même habitacle. Secundo, gain de +80% à +200% en volume de rangement individuel de bagages, comparé à des rangements classiques. Tertio, gain en sécurité des bagages, tous à proximité immédiate, ceux au sol étant cadenassables. Quarto, gain en efficience d'un air conditionné mieux canalisé. Quinto, gain en équilibrage des trafics, par attrait pour ceux faibles où l'on peut choisir sa position à son gré. L'absence de sensation d'entassement s'explique parce que l'invention ne fait que récupérer les 30% du volume de l'habitacle qui étaient jusqu'ici inemployés: en haut, sous la voûte, et au sol sous les sièges assis.

L'unité de l'invention tient aux implications de l'observation suivante: Du fait de la pesanteur, tout homme qui se relève d'un siège assis, trace avec sa tête une équerre dans un sens. En effet, avant de s'élever, tête et buste doivent impérativement pivoter en avant autour des hanches pour amener le centre de gravité du corps à l'aplomb des pieds, et pouvoir ensuite s'élever verticalement de 40 cm, soit la longueur du fémur qui passe de l'horizontale à la verticale. Et en sens inverse pour s'asseoir.

Il s'ensuit que par exemple, dans un véhicule aménagé avec des rangées de sièges assis dites transversales de part ed d'autre d'un couloir dit longitudinal, la face supérieure de l'espace utilisé par les occupants de ces sièges assis, n'est pas un plan horizontal, mais une surface cyilindrique ondulée à génératrices transversales, d'amplitude verticale égale au fémur de 40 cm qui matérialise la différence de hauteur entre un occupant assis et debout. Ladite ondulation n'est d'ailleurs utilisables qu'au dessus des rangées de sièges assis d'orientation successive alternée, car elle est alors continue et de grande longueur comme le profil d'une chaise-longue relax avec point bas milieu et extrémités relevées en tête et au pied. L'accès audit point bas milieu se fait au moyen de marches placées juste en face en bordure du couloir contre les dossiers dos à dos. Cet étage supplémentaire de chaises-longues supprime les étagères habituelles de rangement de bagages des occupants des sièges assis. Mais précisément, ladite disposition de rangées d'orientation alternée, crée sous chaque couple de sièges assis dos à dos, deux rangements individuels de bagages de volume nettement plus grand que celui habituellement alloué avec des sièges assis, et cela pour deux raisons: primo, à aisance égale le pas des sièges assis de sens alterné est supérieur de 10% au double du pas simple de sièges assis de même sens. Secundo, chaque rangement se prolonge sous l'aplomb du dossier, ce qui serait impossible quand les sièges sont de même sens. L'accès à chaque rangement au sol se fait en relevant l'assise du siège. Mais cela interdit l'utilisation d'une tablette médiane démontable propre aux sièges en vis-à-vis. Celle-ci est à remplacer par des tablettes individuelles dépliables en demi-déploiement pour permettre à l'occupant d'en face de manipuler des bagages. Une telle tablette étant lourde et de rotations encombrantes, il est avantageux de la fractionner en deux moitiés symétriques gauche et droite.

Neuf figures données en exemples non limitatifs appuient la description:

figure 1, vue en plan au sol d'un habitacle selon l'invention,

figure 2, coupe longitudinale en élévation de la figure 1 avec un étage relax,

figure 3, coupe transversale en élévation de la figure 2,

figure 4, détail d'une tablette rabattable individuelle en vue cavalière,

figure 5, variante de la figure 2 avec deux étages de sièges relax,

figure 6, variante vue en plan des figures 2 et 3, avec sièges relax obliques,

figure 7, variante en élévation, et

figure 8, détail, de deux sièges assis en vis-à-vis se transformant à volonté en deux sièges relax superposés,

figure 9, en élévation application de l'invention au train français dit TGV.

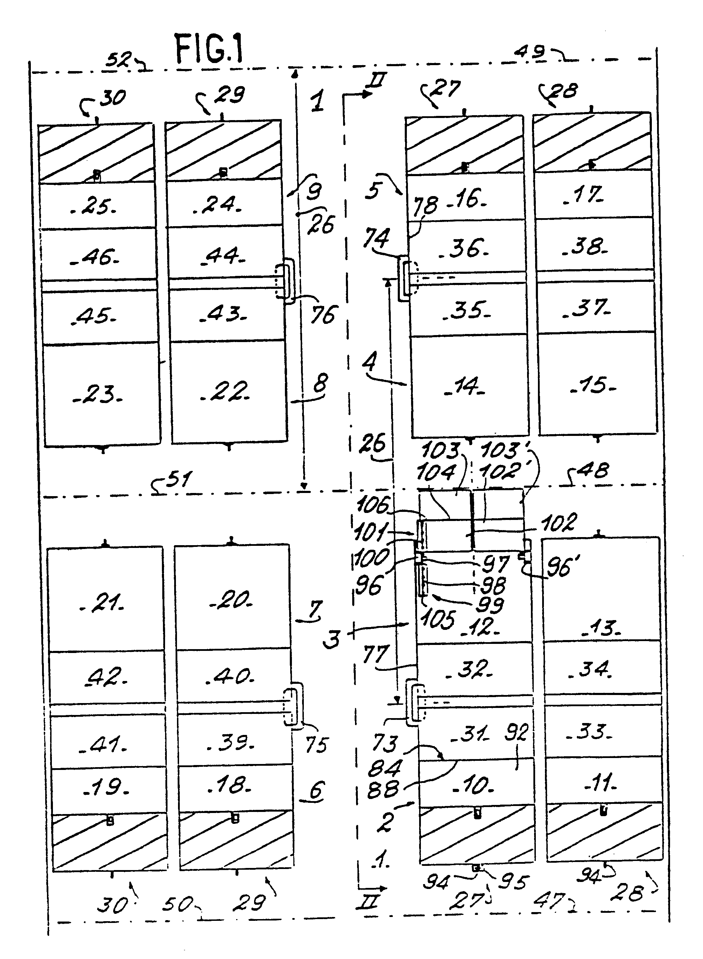

En se référant aux figures 1, 2, 3, l'invention concerne des habitacles du genre comprenant au moins un couloir principal 1, dit longitudinal, de largeur 50 cm, de chaque côté duquel sont disposées au sol et symétriquement des rangées transversales successives 2, 3, 4, 5 et 6, 7, 8, 9 de sièges assis identiques, de deux optimum, 10-11, 12-13, 14-15, 16-17, et 18-19, 20-21, 22-23, 24-25, lesdites rangées étant d'orientation alternée et de double pas 26 — de 185 cm —, selon un quadrillage irrégulier comprenant des suites longitudinales 27, 28 et 29, 30 le long desquelles ces sièges assis successifs sont, soit dos à dos 10-12, 11-13, 14-16, 15-17, et 18-20, 19-21, 22-24, 23-25, avec dossiers accolés 31-32, 33-34, 35-36, 37-38 et 39-40, 41-42, 43-44, 45-46 soit en vis-à-vis 12-14, 13-15 et 20-22, 21-23 encadrant les couloirs secondaires transversaux 47, 48, 49 et 50, 51, 52, de 45 cm.

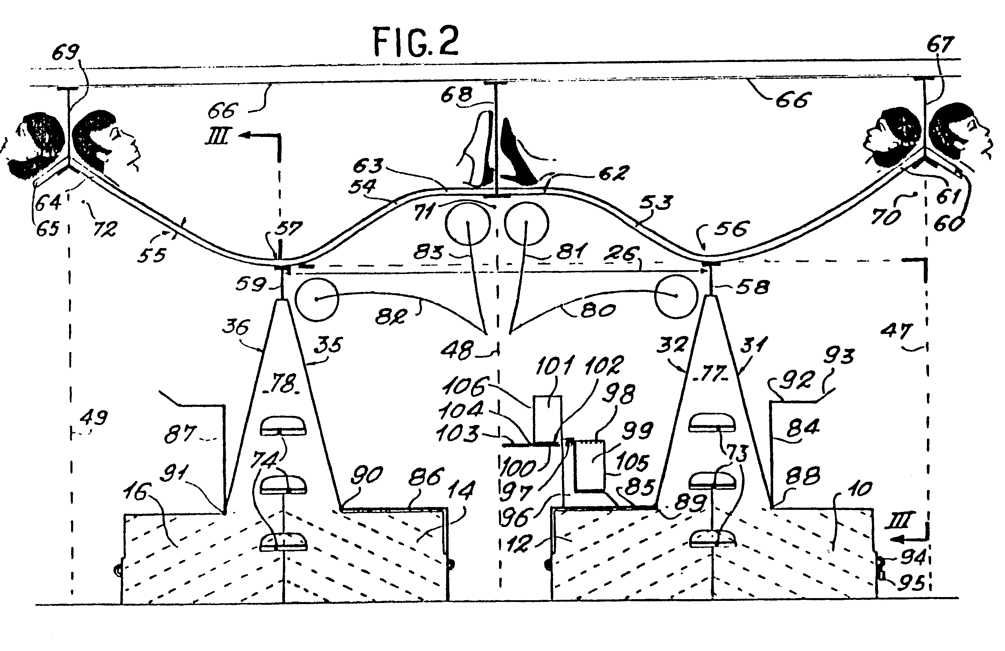

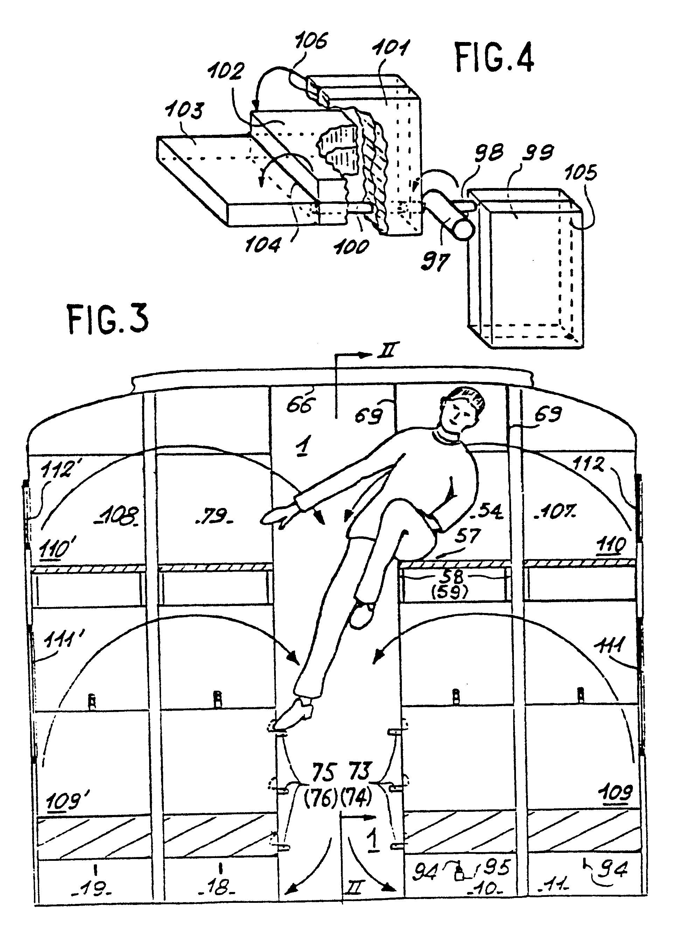

Selon une première caractéristique de l'invention, au moins au-dessus des deux suites longitudinales 27 et 29 de sièges assis, au bord du couloir 1, sont disposés des relax successifs 53, 54 figure 2 identiques, longitudinaux, d'orientation alternée, à raison d'un relax pour deux sièges assis, et dont les profils minces 55, d'épaisseur 3 cm, sont ondulés en longueur et positionnées en hauteur et longueur de façon que leurs points bas milieu 56, 57, à hauteur de 140 cm, prennent appui par des supports 58, 59 sur lesdits dossier 31-32, 35-36 accolés dos à dos, et que leurs extrémités voisines relevées 60-61, 62-63, 64-65 bout à bout, soient suspendues à la voûte intérieure 66 au moyen de tirants 67, 68 69, et constituent les hauts 70, 71, 72 des couloirs secondaires successifs 47, 48, 49 de hauteur 180 cm, les passagers plus grands devant y baisser la tête un court instant. Ces tirants peuvent être télescopiques pour pouvoir plaquer contre la voûte les relax en attente. Non figurée, une sangle horizontale, escamotable en s'abaissant lors de l'accès, borde les relax. Figures 1, 2, 3 des marches 73, 74 et 75, 76 placées de chaque bord du couloir 1 sur les verticales médianes des flancs 77, 78 communs à chaque couple de sièges accolés dos à dos 10-12, 14-16 permettent à un passager de s'asseoir de dos sur le point bas milieu 57 du relax 54 du bord droit du couloir 1 en s'élevant au moyen des marches 76 du bord gauche en face. La figurine dessinée en figure 3 est en cours de renversement dans le relax 54. Symétriquement, l'accès au relax 79 du bord gauche du couloir 1, se fait au moyen des marches 74 du bord droit, en face.

L'occupant qui se relève du siège assis 12 figure 2, ne peut heurter le relax 53 au-dessus, car sa tête, figurée par un rond, décrit d'abord autour des hanches un arc de cercle 80 sensiblement horizontal, puis remonte suivant 81 sensiblement vertical. Et pour s'asseoir, la trajectoire est inverse. Pour le siège 14 situé sous le relax 54, les trajectoires de la tête sont les symétriques 82 et 83.

Selon une deuxième caractéristique, figures 1 et 2, l'assise 84, 85, 86, 87 de chaque siège assis 10, 12, 14, 16 pivote autour d'une charnière transversale 88, 89, 90, 91 située sur son arrière, pour ouvrir ou fermer le coffre individuel de bagages au sol qui, comme indiqué en hachures pointillées figure 2, s'étend jusque sous le dossier 31 pour le siège 10, ce qui serait impossible sous des sièges assis de même sens l'un derrière l'autre.

Les assises 84, 87 sont relevées et 85, 86 rabattues. Chaque assise 84 comprend un large «bord tombé» 92 perpendiculaire qui découvre d'autant l'avant du coffre et facilite la manutention des bagages. Ces coffres font: profondeur 60 cm, largeur 45 cm, hauteur 35 cm. Ils sont munis de moyens de fermeture simples. Par exemple l'assise 84-92 porte une languette articulée 93 à évidement se rabattant sur un demi-anneau 94 fixé sur l'avant du coffre fermable par des clips non figurés et un cadenas personnel 95.

Selon une troisième caractéristique, chaque siège assis 12, figures 1, 2, 4 est muni d'une tablette individuelle rabattable, fractionnée en deux moitiés symétriques gauche et droite. Par exemple, le montant gauche 96 du siège 12 porte un premier axe de rotation 97 transversal fixe autour duquel un deuxième axe de rotation 98 perpendiculaire longitudinal arrière, portant la demi-tablette gauche 99 verticale basse composée de deux éléments repliés en dièdre, pivote de 180° vers l'avant en 100 longitudinal avant, entraînant la demi-tablette en 101 verticale haute, qui elle-même se rabat de 90° transversalement autour dudit axe 100 jusqu'à la position horizontale 102, l'élément supérieur dudit dièdre se rebattant de 180° vers l'avant en 103 autour du troisième axe de rotation 104 que l'on voit également en 105, 106 dans les positions précédentes 99, 101.

Des butées non figurées limitent les rotations. Symétriquement, le montant droit 96', figure 1 porte les deux éléments déployés 102' et 103'. Ce fractionnement en deux moitiés permet des rotations moins encombrantes, au moyen d'un matériel plus robuste qui autorise le demi-déploiement de chaque demi-tablette pour ne pas gêner la manutention des bagages en face.

Selon une quatrième caractéristique, chaque relax 54 et 79, figure 3 au bord du couloir 1 est prolongé en abord transversal par une surface 107, 108 de même profil ondulé précité, qui sert de grand rangement individuel de bagages à proximité immédiate, tout indiqué pour les gros «sacs à dos». D'autres caractéristiques apparaîtront dans ce qui suit.

De chaque côté du couloir 1 et jusqu'au flanc de l'habitacle, l'étage de relax constitue une nappe jointive étanche 54-107, 79-108, figure 3, qui canalise suivant les flèches dessinées, l'air conditionné recyclé par des bouches latérales non figurées 109, 110 et 109', 110'.

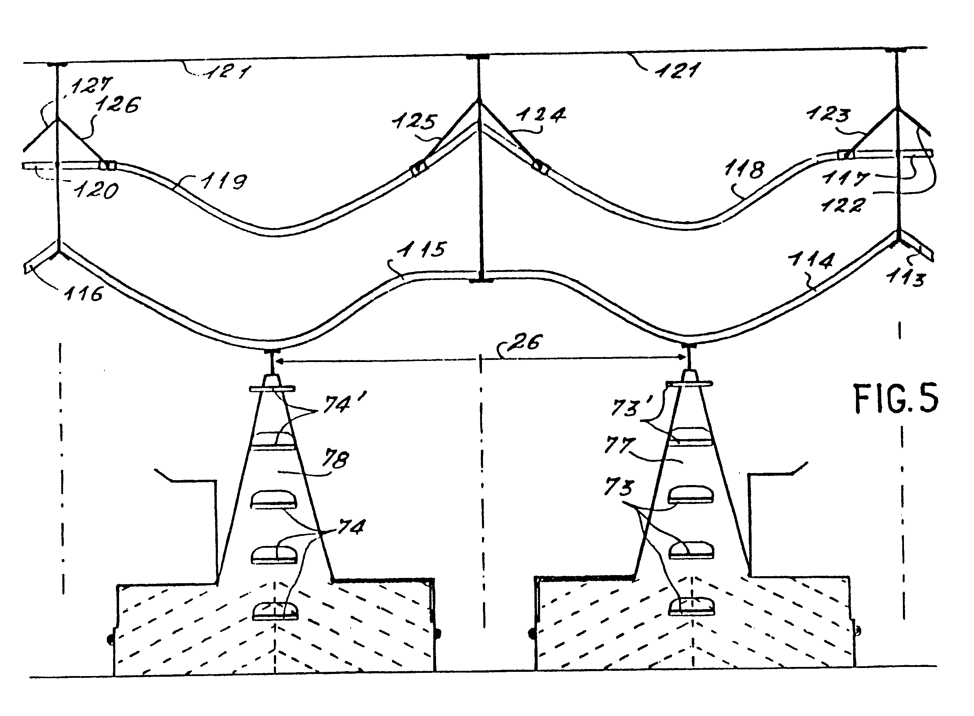

Des fenêtres aux normes de sécurité 111, 111' pour l'étage assis, et moins hautes 112, 112', pour l'étage relax, donnent bonne vue sur l'extérieur. En figure 5, l'étage des relax successifs 113, 114, 115, 116 est surmonté d'un deuxième étage de relax 117, 118, 119, 120, chacun 118 étant au-dessus d'un autre 114, de préférence 50 cm plus haut et en tête-bêche, les marches 73, 74, 75, 76 étant prolongées de 50 cm en 73', 74'. Ce deuxième étage de relax est entièrement suspendu à la voûte intérieure 121 au moyen de tirants 122, 123-124, 125-126, 127, obliques pour soulager les structures et écartés pour garder l'aisance d'accès aux relax.

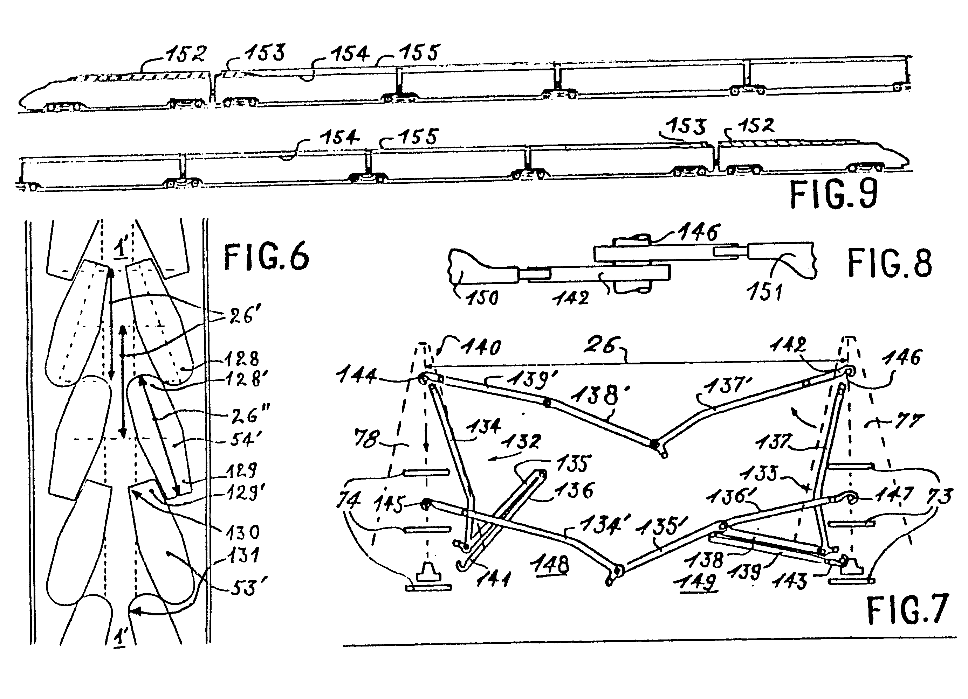

Avec des rangées de sièges assis resserrées, par exemple de double pas 155 cm au lieu de 185 cm, les relax en étage restent longitudinaux en gardant bout à bout leurs extrémités voisines, avec un profil ondulé accentué et resserré d'autant, soit 155 cm en implantation. Mais, figure 6, en variante, tous les relax 53', 54' de chaque bord peuvent avoir une même obliquité de 15° sur le couloir 1'. La juxtaposition des extrémités de tête 128, 128' et de pied 129, 129', permet de conserver une longueur du relax 26" normale en implantation, supérieure au double pas 26' des rangées de sièges assis. Les débordements des pieds 130 et tête 131 des relax, au moins au-dessus des épaules des passagers, ne gênent pas.

En variante, dans les rangées de sièges assis en vis-à-vis, ces sièges non figurés, sont de chaque bord tous inclinés de 15° sur le couloir 1, de sorte que les occupants en vis-à-vis peuvent allonger leurs jambes, sans se gêner l'un l'autre car elles se trouvent disposées en quinconce.

En variante encore, dans chaque couple de sièges assis en vis-à-vis, figure 7, 132-133, chacun des sièges se compose d'un ensemble amovible de trois panneaux jointifs articulés 134-135-136 pour 132 et 137-138-139 pour 133, muni aux quatre coins en ses deux extrémités, de crochets 140, 141 et 142, 143 qui coopèrent avec deux tourillons fixes horizontaux haut et bas 144, 145 et 146, 147 situés l'un sous l'autre et distants de 50 cm dans chacun des plans verticaux médians des sièges accolés dos à dos, de façon à pouvoir occuper simultanément, soit la position déployée de relaxation 134'-135'-136' et 137'-138'-139', suspendue entre deux tourillons, de même hauteur 144-146 pour l'un et 145-147 pour l'autre, soit la position repliée assise, suspendue au tourillon supérieur 144 et 146 concerné, par les crochets du dossier 134 et 137, et reposant par ses deux autres panneaux repliés 135-136 et 138-139 formant assise sur ledit coffre concerné 148 et 149. Ici, le choix entre positions assise et relax n'est plus individuel mais commun aux deux occupants en vis-à-vis.

Sur la figure 8, lesdits crochets 140, 141 et 142, 143 sont montés en «baïonnette» sur les tourillons 144, 146 et 145, 147, avec des décroisements 150, 151, tous de même sens, qui font que les sièges successifs sont exactement dans le prolongement les uns des autres.

En figure 9, ensemble roulant ferroviaire type français «TGV» les hachures 152 sur motrices plus 153 sur le début de la voiture voisine, représentent deux protubérances distantes de 145 mètres, dont chacune perturbe l'air à grande vitesse, dépassant de 50 cm le toit 154 des voitures intermédiaires. D'autre part, la hauteur 225 cm de la voûte intérieure de ces voitures ne permet d'aménager qu'un seul étage de relax selon l'invention. En application de l'invention, ledit toit 154 des voitures est rehaussé de 50 cm en 155, de façon à créer un deuxième étage de relax en haut de la voûte intérieure ainsi surélevée de 50 cm. Le gain de + 13% en nombre total des sièges «assis plus relax» avec un étage, est alors relevé à + 33% tandis que lesdites protubérances 152-153 de chaque extrémité disparaissent dans le nouveau profil 155 continu, plus aérodynamique et plus esthétique. Comme autre avantage consécutif, cette surélévation de 50 cm des voûtes intérieures, crée aux deux bouts inhabités de chaque voiture, en haut, de nouveaux volumes précieux pour loger l'équipement supplémentaire requis par la majoration de capacité des voitures.


**Revendications**

1. Equipement de véhicules de transport en commun par air, eau, route, rail et de lieux de transit, du type comportant la présence simultanée de sièges «assis» et de sièges «relax», comprenant un couloir principal longitudinal (1), au bord duquel sont disposée au sol symétriquement des rangées transversales successives (2, 6) de sièges identiques dits «assis» (10-11) (18-19), lesdites rangées étant d'orientation alternée et de double pas (26) selon un quadrillage comprenant des suites longitudinales (27, 29) le long desquelles ces sièges assis successifs sont, soit dos à dos (10-12) (39-40), soit en vis-à-vis (12-14) (20-22) encadrant des couloirs secondaires transversaux (48, 51), et comprenant, au-dessus de deux suites longitudinales (27, 29) de sièges «assis», des couchettes (54), caractérisé en ce que ces couchettes sont des sièges «relax» aux estrémités relevées, successifs, identiques, longitudinaux, d'orientation alternée, à raison d'un relax pour deux sièges assis, et dont les profils minces (55) sont ondulés en longueur et positionnés en hauteur et longueur, de façon que leurs points bas milieu (57) prennent appui par des supports (59) sur lesdits dossiers accolés dos à dos (35-36), et que leurs extrémités voisines relevées (62-63) soient suspendues à la voûte intérieure (66) au moyen de tirants (68), et constituent les hauts (71) des couloirs secondaires successifs (48), des marches (74) placées de chaque bord du couloir (1) sur les verticales médianes des flancs (78) communs à chaque couple de sièges accolés dos à dos (14-16) permettant à un passager de s'asseoir de dos sur le point bas milieu (57) du relax (54) d'un bord du couloir (1) en s'élevant au moyen des marches (76) du bord en face.

2. Equipement selon la revendication 1, du type destiné à recevoir en outre des bagages accompagnés, caractérisé en ce que l'assise (84) de chaque siège assis (10) pivote autour d'une charnière transversale (88) située sur son arrière, pour ouvrir ou fermer le coffre individuel de bagages au sol, qui s'étend jusque sous le dossier (31), chaque coffre étant muni de moyens de fermeture, l'assise (84-92) portant une languette articulée (93) à évidement se rabattant sur un demi-anneau (94) fixé sur l'avant du coffre que l'on peut fermer par des clips et par un cadenas personnel (95).

3. Equipement selon les revendications 1 et 2, du type comportant des tablettes individuelles rabattables, caractérisé en ce que chaque tablette individuelle rabattable solidaire du siège assis (12), est fractionnée en deux moitiés symétriques gauche et droite, le montant gauche (96) portant un premier axe de rotation (97) transversal fixe, autour duquel un deuxième axe de rotation (98) perpendiculaire longitudinal arrière, portant la demi-tablette gauche (99) verticale basse composée de deux eléments repliés en dièdre, pivote de 180° vers l'avant en (100) longitudinal avant, entraînant la demi-tablette en (101) verticale haute qui elle-même se rabat de 90° transversalement autour dudit axe (100) jusqu'à la position horizontale (102), l'élément supérieur dudit dièdre se rebattant de 180° vers l'avant en (103) autour du troisième axe de rotation (104).

4. Equipement selon la revendication 1, caractérisé en ce que chaque relax (54, 79) au bord du couloir (1), est prolongé en abord transversal par une surface (107, 108), de même ondulation servant de grand rangement individuel.

5. Equipement selon la revendication 1, caractérisé en ce que, de chaque côté du couloir (1) et jusqu'au flanc de l'habitacle, l'étage de relax constitue une nappe jointive étanche (54-107) et (79-108) canalisant l'air recyclé par des bouches latérales (109, 110) et (109', 110').

6. Equipement selon la revendication 1, caractérisé en ce que l'étage des relax successifs (114) est surmonté d'un deuxième étage de relax (118), chacun (118) étant au-dessus d'un autre (114), les marches (73) étant prolongées en (73'), ce deuxième étage étant entièrement suspendu à la voûte intérieure (121) au moyen de tirants (132-124) obliques et écartés.

7. Equipement selon la revendication 1, caractérisé en ce que, avec des rangées de sièges assis de faible pas (26'), tous les sièges relax (53', 54') présentent une obliquité de 15° sur le couloir (1'), leurs extrémités (128, 128') en tête et (129, 129'), au pied, étant juxtaposées de façon à conserver, vue en plan, une longueur (26'') normale supérieure a (26').

8. Equipement selon la revendication 1, caractérisé en ce que les sièges assis sont obliques de 15° sur le couloir (1), pour quinconcer les jambes vis-à-vis.

9. Equipement selon la revendication 1, caractérisé en ce que, dans chaque couple de sièges assis (132-133) en vis-à-vis, chacun des sièges se compose d'un ensemble amovible de trois panneaux jointifs articulés (134-135-136) pour (132) et (137-138-139) pour (133), muni aux quatre coins en ses deux extrémités, de crochets (140, 141) et (142, 143) qui coopèrent deux tourillons fixes horizontaux haut et bas (144, 145) et (146, 147) situés l'un sous l'autre, de façon à pouvoir occuper simultanéament, soit la position déployée de relaxation (134'-135'-136') et (137'-138'-139') suspendue entre deux tourillons de même hauteur (114-116) pour l'un et (145-147) pour l'autre, soit la position repliée assise, suspendue au tourillon supérieur (144) et (146) concerné, par les crochets du dossier (134 et 137) et reposant par ses autres panneaux repliés (135-136) et (138-139) formant assise, sur le coffre concerné (148, 149), lesdits crochets (142) étant montés en «baïonnette» sur les tourillons (146), avec des décroisements (150, 151) tous de même sens.

10. Application de l'équipement, selon la revendication 6, à un ensemble roulant ferroviaire comportant des protubérances de 50 cm au-dessus des motrices d'extrémités, par exemple du type français TGV, caractérisé en ce que le toit (154) des voitures est rehaussé de 50 cm en (155) sur la longueur de la rame s'étendant entre ces protubérances (152-153) de chaque extrémité, de façon à créer un deuxième étage relax, lesdites protubérances disparaissant dans le nouveau profil (155) continu, aérodynamique et esthétique.

**Patentansprüche**

1. Ausstattung von öffentlichen Personen-Transportfahrzeugen in der Luft, zu Wasser, auf der Strasse und der Schiene sowie von Transitgebäuden, wobei gleichzeitig Sitze zum Sitzen und zum Liegen vorhanden sind, mit einem Hauptlängsgang (1), an dessen Rand auf dem Boden aufeinanderfolgende Querreihen (2, 6) von identischen Sitzen (10-11) (18-19) zum Sitzen symmetrisch angeordnet sind, wobei die Reihen abwechselnd und mit doppeltem Gitterschritt (26) gemäss einem Gittermuster ausgerichtet sind, welches Längsreihen (27, 29) aufweist, längs welcher sich diese aufeinanderfolgenden Sitze zum Sitzen entweder Rücken an Rücken (10-12) (39-40) oder gegenüberliegend (12-14) (20-22) unter Begrenzung von Nebenquergängen (48, 51) befinden, und mit Liegelplätzen (54) oberhalb der zwei Längsreihen (27, 29) von Sitzen zum Sitzen, dadurch gekennzeichnet, dass diese Liegeplätze aufeinanderfolgende, identische, längliche Liegesitze mit erhöhten Enden und abwechselnder Orientierung und mit einem Liegesitz auf zwei Sitze zum Sitzen sind, wobei ihre schmalen Konturen (55) in Längsrichtung gewellt und bezüglich der Höhe und Länge derart positioniert sind, dass sich ihre unteren Mittelpunkte (57) auf Stützen (59) auf den Rücken an Rücken verbundenen Rückenlehnen (35-36) abstützen und ihre erhöhten, benachbarten Enden (62-63) an dem inneren Gewölbe (66) mittels Zugstreben (68) aufgehängt sind und den höchsten Punkt (71) der aufeinanderfolgenden Nebengänge (48) bilden, und dass Stufen (74), die auf jeder Seite des Ganges (1) an den vertikalen Mitten der Seitenwände (78) angeordnet sind, die jedes rückenverbundene Sitzpaar (14-16) gemeinsam hat, einem Fahrgast ermöglichen, sich mit dem Rücken auf den unteren Mittelpunkt (57) des Liegesitze (54) von einer Seite des Ganges (1) her zu setzen, indem er mittels der Stufen (76) auf der gegenüberliegenden Gangseite emporsteigt.

2. Ausstattung von der Art, welche ferner Reisegepäck aufnehmen soll, nach Anspruch 1, dadurch gekennzeichnet, dass die Sitzfläche (84) eines jeden Sitzes (10) zum Sitzen um ein sich an seiner Rückseite befindendes Querscharnier (88) verschwenkbar ist, um den individuellen Gepäckraum am Boden zu öffnen oder zu schliessen, der sich bis unter die Rückenlehne (31) erstreckt, wobei jeder Raum mit Verschliessmitteln versehen ist, und die Sitzfläche (94-92) eine eine Ausnehmung aufweisende, verschwenkbare Zunge (93) trägt, die auf einen vorne an dem Raum befestigten Halbring (94) herunterklappbar und durch Clips und ein persönliches Vorhängeschloss (95) verschliessbar ist.

3. Ausstattung von der Art, welche herunterklappbare, einzelne Tabletts umfasst, nach Anspruch 1 und 2, dadurch gekennzeichnet, dass jedes einzelne, herunterklappbare, fest mit dem Sitz (12) zum Sitzen verbundene Tablett in zwei symmetrische Hälften, links und rechts, unterteilt ist, dass die linke Stütze (96) eine erste feste Querdrehachse (97) trägt, um welche eine zweite senkrechte, rückwärtige Längsdrehachse (98), welche das senkrechte, untere, aus zwei zu einem Dieder zusammengeklappten Elementen bestehende linke Halbtablett (99) trägt, um 180° nach vorne in die vordere Längsrichtung (100) schwenkt, wobei das Halbtablett senkrecht nach oben (101) mitgenommen wird, welches selbst um 90° quer um die Achse (100) bis in die horizontale Lage (102) herunterklappbar ist, und dass das obere Element des Dieders um 180° um die dritte Drehachse (104) nach vorne in die Lage (103) herunterklappbar ist.

4. Ausstattung nach Anspruch 1, dadurch gekennzeichnet, dass jeder Liegesitz (54, 79) am Rand des Ganges (1) mit einer in Querrichtung zugängigen Fläche (107, 108) der gleichen Wellenform verlängert ist, die als grosse, individuelle Ablage dient.

5. Ausstattung nach Anspruch 1, dadurch gekennzeichnet, dass die Liegeetage auf jeder Seite des Ganges (1) bis zur Seitenwand des Fahrgastraumes eine dichte, aneinanderstossende Fläche (54-107) und (79-108) bildet, die die von den Seitenklappen (109, 110) und (109', 110') zurückgeführte Luft kanalisiert.

6. Ausstattung nach Anspruch 1, dadurch gekennzeichnet, dass über der Etage mit aufeinanderfolgenden Liegesitzen (114) eine zweite Etage mit Liegesitzen (118) angebracht ist, von denen jeder (118) oberhalb eines anderen (114) ist, dass die Stufen (73) bis zu (73') verlängert sind und dass die zweite Etage vollständig an dem inneren Gewölbe (121) mittels schräger und beabstandeter Zugstreben (132-124) aufgehängt ist.

7. Ausstattung nach Anspruch 1, dadurch gekennzeichnet, dass bei Sitzreihen zum Sitzen mit geringem Gitterabstand (26') alle Liegesitze (53', 54') eine Schrägstellung von 15° über den Gang (1') aufweisen, wobei ihre Kopfenden (128, 128') und ihre Fussenden (129, 129') derart nebeneinander angeordnet sind, dass sie in Draufsicht betrachtet, eine normale Länge (26'') beibehalten, die grösser als (26') ist.

8. Ausstattung nach Anspruch 1, dadurch gekennzeichnet, dass die Sitze zum Sitzen zu dem Gang (1) um 15° schräggestellt sind, um gegenstehende Beine zu versetzen.

9. Ausstattung nach Anspruch 1, dadurch gekennzeichnet, dass bei jedem Paar von gegenüberliegenden Sitzen (132-133) zum Sitzen jeder Sitz von einer bewegbaren Einheit aus drei gelenkig verbundenen Plattenteilen (134-135-136) für (132) und (137-138-139) für (133) besteht, die an den vier Ecken ihrer beiden Enden mit Haken (140, 141) und (142, 143) versehen ist, die mit zwei festen, horizontalen oberen und unteren (144, 145) und (146, 147), übereinander angeordneten Zapfen zusammenarbeiten, derart, dass entweder die auseinandergeklappte (134'-135'-136') und (137'-138'-139') zwischen zwei Zapfen gleicher Höhe (144-146) für die eine Einheit und (145-147) für die andere Einheit aufgehängte Liegestellung oder die zusammengeklappte Sitzstellung eingenommen werden kann, in der die Einheit mit den Haken des Rückens (134 und 137) an den betreffenden oberen Zapfen (144) und (146) aufgehängt ist und mit ihren anderen zusammengeklappten, die Sitzfläche bildenden Plattenteilen (135-136) und (136-139) auf dem betreffenden Kofferraum (148, 149) ruht, wobei die Haken (142) durch Bajonettverbindung an den Zapfen (146) angebracht sind und die Entriegelungsausnehmungen (150, 151) alle den gleichen Sinn aufweisen.

10. Anwendung der Ausstattung nach Anspruch 6 bei einer Eisenbahnzugeinheit mit Aufstülpungen von 50 cm über die Triebwagen an den Enden, z.B. vom Typ der französischen TGV, dadurch gekennzeichnet, dass das Dach (154) der Wagen um 50 cm bis zu (155) über die Länge der Zugeinheit angehoben wird, die sich zwischen diesen Auswölbungen (152-153) an jedem Ende erstreckt, so dass eine zweite Liegeetage geschaffen wird, wobei die Auswölbungen in dem neuen, durchgehenden, aerodynamischen und ästhetischen Profil (155) verschwinden.

**Claims**

1. Equipment of air, sea, road, and rail public transport vehicles and transit areas, where sitting seats and loungers are simultaneously present, of the type having at least one longitudinal main passageway (1), on either side of which are symmetrically arranged on the ground successive transverse rows, (2, 6) of identical sitting seats (10, 11, 18, 19), said rows having an alternating orientation and double spacing (26), in accordance with an irregular square pattern, having longitudinal sequences (27, 29) along which these successive sitting seats are either back to back (10-12, 39, 40) with coupled seat backs, or facing (12-14, 20-22) and surrounding transverse secondary passegeways (48, 51), comprising loungers (54) above two longitudinal sequences (27, 29) of sitting seats, characterized in that there are alternately oriented, longitudinal, identical, successive loungers with raised ends, at a rate of one lounger for every two sitting seats and whereof the thin profiles (55) are unduladed lengthwise and positioned lengthwise and heightwise so that their central bottom points (57) bear by supports (59) on the seat backs coupled back to back (35, 36), and their adjacent raised ends (62, 63) are suspended on the inner curved roof portion (66) by means of tie bolts (68) and constitute the top (71) of the successive secondary passegeways (48), steps (74) being placed on each side of the passageway (1) on median vertical parts of the sides (74), common to each pair of seats coupled back to back (14-16), enabling a passsenger to sit back to the central bottom point (57) of the lounger (54) of one side of the passageway (1) and raises himself by means of the steps (76) on the facing side.

2. Equipment according to claim 1, of the type also intended to receive accompanied luggage, characterized in that the horizontal seat portion (84) of each sitting seat (10) pivots about a transverse hinge (88) located on its rear part, in order to open or close the individual floor level luggage compartment extending beneath the seat back (31), each compartment being provided with closing means, the horizontal seat portion (84-92) carrying an articulated tongue (93) with a slot folding on to a half-ring (94) fixed to the front of the compartment, which can be closed by clips and a personal padlock (95).

3. Equipment according to claims 1 and 2, of the type having individual foldable trays, characterized in that each individual foldable tray integral with the sitting seat (12) is subdivided into two symmetrical halves to the left and right, the left-hand post (96) carrying a first fixed transverse pin (97), about which pivots a rear, longitudinal, perpendicular pivot pin (98), which carries the bottom, vertical, left-hand half-tray (99), formed from two elements folded in dihedron manner, pivots by 180° longitudinally forwards (at 100) displacing the vertical, top half-tray (at 101) which is itself folded by 90° transversely about the said pivot (100) into the horizontal position (102), the upper element of the dihedron folding by 180° towards the front (at 103) about the third pivot pin (104).

4. Equipment according to claim 1, characterized in that each lounger (54, 79) on the side of the passageway (1) is transversely extended by a surface (107, 108) with the same undulation and providing a large individual stowing zone.

5. Equipment according to claim 1, characterized in that on each side of the passageway (1) and up to the side of the cabin, the lounger stage constitutes a tight contiguous layer (54, 107, 79, 108) channelling the recycled air by lateral openings or nozzles (109, 110; 109', 110').

6. Equipment according to claim 1, characterized in that the stage of successive loungers (114) is surmounted by a second lounger stage (118), each (118) of them being above another (114), the steps (73) being extended (at 73'), said second stage being entirely suspended on the inner roof area (121) by means of oblique, spaced tie bolts (132, 124).

7. Equipment according to claim 1, characterized in that in the case of rows of sitting seats with a limiting spacing (26'), all the loungers (53', 54') have an obliqueness of 15° relative to the passageway (1), their head (128, 128') and foot (129, 129') ends being juxtaposed so as to retain, in plan view, a normal length (26'') exceeding (26').

8. Equipment according to claim 1, characterized in that the sitting seats are oblique by 15° with respect to the passageway (1), so that facing legs assume a staggered position.

9. Equipment according to claim 1, characterized in that in each pair of facing sitting seats (132, 133), each of the seats comprises a detachable assembly of three articulated contiguous panels (134, 135, 136) for (132) and (137, 138, 139) for (133), provided at the four corners of its two ends with hooks (140, 141; 142, 143), which cooperate with two top and bottom, horizontal, fixed pivot pins (144, 145; 146, 147), positioned one above the other, so as to simultaneously occupy either the extended relaxing position (134', 135'; 136'; 137', 138', 139') suspended between two pivot pins of the same height (114, 116) for one and (145, 147) for the other or the sitting position, suspended on the upper pivot pins (144, 146) by the hooks of the seat back (134, 137) and resting by its other folded panels (135, 136; 138, 139) forming the horizontal seat portion of the particular baggage compartment (148, 149), said hooks (142) being mounted in bayonet-like manner on the pivot pins (146), with shifts (150, 151) all in the same direction.

10. Application of the equipment according to claim 6, to a train having 50 cm protuberances above the end motor units, e.g. in the form of the French high speed train, characterized in that the roof (154) of the cars is raised by 50 cm at (155), the length of the train extending between said protuberances (152, 153) at either end, so as to form a second lounger stage, said protuberances disappearing in the new, continuous, aerodynamic and esthetic profile (155).

FIG.1

FIG.2

0 143 044

FIG.4

FIG.3

FIG.5

FIG.9

FIG.6

FIG.8

FIG.7

0 143 044